Europäisches Patentamt

European Patent Office

Office européen des brevets

(19)

(11) **EP 1 152 379 A2**

(12) **EUROPÄISCHE PATENTANMELDUNG**
veröffentlicht nach Art. 158 Abs. 3 EPÜ

(43) Veröffentlichungstag:
**07.11.2001   Patentblatt 2001/45**

(51) Int Cl.⁷: **G07F 7/12**

(21) Anmeldenummer: **00909817.9**

(22) Anmeldetag: **16.02.2000**

(86) Internationale Anmeldenummer:
**PCT/RU00/00053**

(87) Internationale Veröffentlichungsnummer:
**WO 00/49514 (24.08.2000 Gazette 2000/34)**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **17.02.1999  RU 99102803**

(71) Anmelder:
  • **Zolotarev, Oleg Anatolievich**
    **Sosnovy Bor Leningradskoi obl., 188537 (RU)**
  • **Kuznetsov, Ivan Vladimirovich**
    **St. Petersburg 191123 (RU)**
  • **Moshonkin, Andrei Gennadievich**
    **St. Petersburg, 191123 (RU)**
  • **Smirnov, Alexandr Leonidovich**
    **St. Petersburg, 191126 (RU)**
  • **Khamitov, Ildar Magafurovich**
    **St. Petersburg, 193029 (RU)**

(72) Erfinder:
  • **Zolotarev, Oleg Anatolievich**
    **Sosnovy Bor Leningradskoi obl., 188537 (RU)**
  • **Kuznetsov, Ivan Vladimirovich**
    **St. Petersburg 191123 (RU)**
  • **Moshonkin, Andrei Gennadievich**
    **St. Petersburg, 191123 (RU)**
  • **Smirnov, Alexandr Leonidovich**
    **St. Petersburg, 191126 (RU)**
  • **Khamitov, Ildar Magafurovich**
    **St. Petersburg, 193029 (RU)**

(74) Vertreter: **Springstubbe, Wolf, Dipl.-Ing.**
    **Parkstrasse 15**
    **82131 Gauting (DE)**

(54) **VERFAHREN ZUM ANFORDERN DER AUSFÜHRUNG EINER MIT DER KARTE VERBUNDENEN VERPFLICHTUNG DURCH DEN KARTENHALTER UND ZUM ANERKENNEN DIESER VERPFLICHTUNG DURCH DEN KARTENAUSGEBER**

(57)     Verfahren zum Anfordern der Erfüllung einer mit einer Karte verbundenen Verpflichtung durch den Karteninhaber und zum Anerkennen dieser Verpflichtung durch den Emittenten, das ein Fernkommunizieren der Beteiligten zulässt und deren Sicherheit gewährleistet. Ein Emittent gibt Karten aus, deren jede einen Identifikator und einen ihm entsprechenden Verifikator aufweist, der mittels eines Maskierers verdeckt ist. Der Karteninhaber übermittelt dem Emittenten den Kartenidentifikator und eine Anweisung zur Erfüllung der Verpflichtung. Der Emittent prüft, dass er niemandem eine unterzeichnete Antwort gegeben hat, die den eingegangenen Identifikator und eine Anweisung verbindet, die sich von der eingegangenen Anweisung unterscheidet, unterzeichnet eine Antwort, die den Identifikator und die Anweisung verbindet, und sendet die unterzeichnete Antwort an den Karteninhaber. Der Karteninhaber prüft die Unterschrift des Emittenten unter der Antwort und, ob die Antwort den Identifikator und die Anweisung verbindet, die er an den Emittenten gesendet hat, und sendet danach an den Kartenverifikator den Emittenten. Der Emittent prüft, ob der Verifikator dem Identifikator entspricht, und anerkennt danach die Verpflichtung, die der kartengemäßen Verpflichtung und der Anweisung des Karteninhabers entspricht. Die Erfindung kann benutzt werden beim Verkauf von Waren und Dienstleistungen, in Lotterien, im Bank- und Finanzgeschäft und auf anderen Gebieten.

**EP 1 152 379 A2**

**Bankkarte**

100 Rubel

| Identifikator | 76503306 |
| Verifikator | 5686892445 |

# Fig. 1

**Beschreibung**

**Gebiet der Technik**

Die Erfindung betrifft das Gebiet der Prüfung von Datenträgern in Form von Karten, mit denen Verpflichtungen des Emittenten verbunden sind, und insbesondere ein Verfahren zum Anfordern der Erfüllung einer mit einer Karte verbundenen Verpflichtung durch den Karteninhaber und zum Anerkennen dieser Verpflichtung durch den Emittenten. Die Erfindung kann zur Organisation des Verkaufs von Waren und Dienstleistungen, in Lotterien, im Bank- und Finanzgeschäft und auf anderen Gebieten Anwendung finden.

**Bisheriger Stand der Technik**

In der Praxis des Geschäftslebens ist ein Verfahren zum Verkauf von Waren und Dienstleistungen unter Benutzung von vorbezahlten Karten bestens bekannt. Das Wesen dieses Verfahrens besteht darin, dass der Emittent spezielle Karten ausgibt, mit jeder von ihnen seine Verpflichtung verbindet und diese Karten unter Kartenerwerbern vertreibt. Später kann ein Kartenerwerber, der im Besitz der Karte ist, die Erfüllung der mit der Karte verbundenen Verpflichtung fordern. Die Anwendung dieses Verfahrens kann den Kreis von potentiellen Verbrauchern von Waren und Dienstleistungen des Emittenten wesentlich erweitern, weil die Karten an Orten vertrieben werden können, die näher bei den potentiellen Verbraucher sind.

Außerdem kann der Erwerb der Verpflichtungen mittels Erwerbs einer Karte anonym erfolgen.

Unter einer Karte wird ein beliebiger materieller Träger verstanden, mit dem die Verpflichtung des Emittenten verbunden ist.

Unter einem Kartenemittenten wird eine Person verstanden, welche die Karten ausgibt, die Verantwortung für die mit den ausgegebenen Karten verbundenen Verpflichtungen trägt und Handlungen zur Prüfung der Karten und Anerkennung der Verpflichtungen durchführt. In der Praxis kann der Emittent die Ausführung eines Teils seiner Funktionen, beispielsweise die Prüfung der Karten, an andere Personen delegieren. Außerdem kann der Emittent selbständig bestimmte zusätzliche Handlungen durchführen oder die Ausführung dieser Handlungen anderen Personen anvertrauen. Zu diesen zusätzlichen Handlungen kann beispielsweise die Herstellung der Karten, der Vertrieb der Karten unter Kartenerwerbern, die Erfüllung von anerkannten Verpflichtungen usw. gehören.

Als Beispiel eines Emittenten kann eine Bank dienen, die Einmalkarten (Wechsel) herausgibt, mit deren jeder die Verpflichtung der Bank verbunden ist, auf ein vom Karteninhaber angegebenes Konto einen bestimmten Geldbetrag zu überweisen. Ein anderes Beispiel eines Emittenten ist ein Lotterieveranstalter, der Lotteriescheine vertreibt. Mit jedem Lotterieschein ist die Verpflichtung des Veranstalters verbunden, einen bei der Ziehung auf diese Karte entfallenden Gewinn auszugeben.

Für den Karteninhaber wäre es bequem, wenn er die Erfüllung der mit der Karte verbundenen Verpflichtung fordern könnte, ohne die Karte dem Emittenten oder seinem Vertreter vorzuzeigen. In diesem Fall könnte der Karteninhaber mit dem Emittenten unter Benutzung elektronischer Kommunikationsmittel fernkommunizieren. Zum Beispiel könnte im Beispielsfall Bank der Karteninhaber, ohne selbst in der Bank zu erscheinen, fordern, einen auf der Karte genannten Betrag einem von ihm genannten Konto gutzuschreiben. Im Fall einer Lotterie könnte der Inhaber eines "glücklichen" Lotteriescheines, der die Lotterieziehung im Fernsehen verfolgt hat, ohne das Haus zu verlassen gleich fordern, dass der Gewinn unter einer von ihm angegebenen Adresse zugestellt wird oder dass der Gewinn-Betrag seinem Konto bei einer Bank gutgeschrieben wird.

Für den Emittenten ist es ebenfalls bequem, mit dem Karteninhaber fernkomminizieren zu können, weil dabei Nebenkosten für das Vorhalten von Büroräumen und einer entsprechenden Infrastruktur gesenkt werden und der Kreis potenzieller Verbraucher von Waren und Dienstleistungen des Emittenten erweitert wird. Zum Beispiel könnten für eine bürolose Internet-Bank die über Nichtbankstellen vertriebenen Karten als Kanal für die Überweisung des Geldes auf die Konten der Kunden dienen.

Vor der Erfüllung seiner Verpflichtung muß der Emittent diese anerkennen, d.h. er muß sich vergewissern, dass die eingegangene Forderung nach Erfüllung der Verpflichtung rechtmäßig ist.

Allgemein bekannt ist ein herkömmliches Verfahren zum Anfordern der Erfüllung einer mit einer Karte verbundenen Verpflichtung durch den Karteninhaber und zum Anerkennen dieser Verpflichtung durch den Emittenten, das eine Fernkommunikation von Karteninhaber und Emittent zulässt. Dieses Verfahren besteht in der Durchführung folgender Schritte:

(1) Der Karteninhaber liest von der Karte deren Identifikator ab und präsentiert dem Emittenten die den Kartenidentifikator und die Anweisung zur Erfüllung der Verpflichtung des Emittenten umfassende Forderung, die Verpflichtung gemäß der Karte zu erfüllen;

(2) Der Emittent prüft die Gültigkeit der Karte nach Maßgabe des durch den Karteninhaber übermittelten Identifi-

3

kators und der Anweisung, d.h. er prüft, ob eine Karte mit einem solchen Identifikator ausgegeben wurde und ob von ihm keine Verpflichtung gemäß dieser Karte anerkannt wurde, die mit einer von der übermittelten Anweisung abweichenden Anweisung ergänzt war;

(3) Der Emittent anerkennt die Verpflichtung, die der Verpflichtung gemäß der Karte und der Anweisung des Karteninhabers entspricht.

Kartenidentifikator heissen Daten, die ein einzelnes Exemplar einer Karte eindeutig definieren. Die Darstellung des Identifikators auf der Karte muß beständig in Bezug auf Versuche zu seiner Modifizierung sein: Zumindest muß die Möglichkeit einer solchen Modifizierung (Fälschung) des Identifikators ausgeschlossen sein, bei der der modifizierte Identifikator mit dem Identifikator einer anderen ausgegebenen Karte übereinstimmt. In konkreten Realisierungen stellt sich der Kartenidentifikator oftmals als ein aus einer Kartennummer und einem Passwort bestehendes Paar dar. Generell besteht keine Notwendigkeit, den Identifikator in Form mehrerer Teile darzustellen, obwohl das in konkreten Realisierungen bequem sein kann.

Anweisung zur Erfüllung der Verpflichtung heissen bestimmte Daten, mit denen die mit der Karte verbundene Verpflichtung zu verbinden ist, um ihr eine konkrete und endgültige Form zu geben, in der sie unmittelbar erfüllt wird. Form und Interpretation der Anweisung werden durch die konkrete Anwendung bestimmt und sind für die Zwecke der Erfindungsbeschreibung ohne Bedeutung. Eine solche Anweisung kann zum Beispiel die Bankkontonummer des Karteninhabers sein, dem ein Gewinn gutzuschreiben ist.

Die Anerkennung der Verpflichtung durch den Emittenten kann in der Realisierung bestimmter Handlungen bestehen oder kann Grundlage zu deren Durchführung sein. Beispielsweise kann der Emittent den Kartenidentifikator und die ihm entsprechende Anweisung zur Erfüllung der Verpflichtung auf der Grundlage seiner Anerkennung in eine Liste anerkannter Verpflichtungen aufnehmen oder die Verpflichtung an ein System zur Erfüllung der Verpflichtungen (zum Eingang einer die Verpflichtungen erfüllenden Einrichtung) weiterleiten. Der Emittent kann dem Karteninhaber auch eine Quittung über die Anerkennung seiner Verpflichtung ausstellen.

Damit der Kartenidentifikator nicht unbemerkt auf dem Wege vom Emittenten zum Karteninhaber von dritter Seite gelesen werden kann, wird der Identifikator gewöhnlich mittels eines Maskierers zumindest teilweise verdeckt (der verdeckte Teil des Identifikators kann als Passwort bezeichnet werden und der offene Teil als Kartennummer). Der Maskierer ist ein Mittel zur zeitweiligen Verdeckung bestimmter mit der Karte verbundener Daten, beispielsweise des Kartenidentifikators. Der Maskierer kann sich in zwei Zuständen - offen und geschlossen - befinden, wobei er folgende Eigenschaften aufweisen muß:

(1) Es ist praktisch nicht möglich, vom Maskierer verdeckte Daten von der Karte abzulesen oder sie zu ändern, wenn der Maskierer sich im geschlossenen Zustand befindet.
(2) Es ist praktisch nicht möglich, den Maskierer aus dem offenen in den geschlossenen Zustand zu überführen.
(3) Man kann leicht feststellen, im welchen Zustand sich der Maskierer befindet.
(4) Man kann den Maskierer leicht aus dem geschlossenen in den offenen Zustand überführen (den Maskierer öffnen).
(5) Man kann von der Karte leicht vom Maskierer verdeckte Daten ablesen, wenn der Maskierer sich im offenen Zustand befindet.

Es sind viele unterschiedliche Arten von Maskierern bekannt, die besonders oft bei der Herstellung von Sofortlotterie-Scheinen benutzt werden. Zur Beschreibung der Erfindung sind nur die oben genannten funktionellen Eigenschaften des Maskierers wichtig, während die konkrete Realisierung und konstruktive Besonderheiten nicht wesentlich sind.

Die Anwendung des oben beschriebenen herkömmlichen Verfahrens beim Verkauf eines Zugangs zum Internet ist in [1, 2] beschrieben. Bei dieser Anwendung aktiviert der Karteninhaber mittels des herkömmlichen Verfahrens ein Konto bei einem Provider eines Zugangs zum Internet, der Emittent der Karten ist.

Im US-Patent [3] wird eine Erfindung auf dem Gebiet des Anbietens von Telefonvermittlungs-Dienstleistungen offenbart, die zum Teil eine Anwendung des oben beschriebenen herkömmlichen Verfahrens zum Verkauf von Telefonvermittlungs-Dienstleistungen ist. Bei dieser Erfindung aktiviert der Karteninhaber mit Hilfe eines herkömmlichen Verfahrens ein Telefonkonto bei einer Telefongesellschaft, die Kartenemittent ist, bzw. er füllt das Konto auf.

Das herkömmliche Verfahren zum Anfordern der Erfüllung einer mit einer Karte verbundenen Verpflichtung durch den Karteninhaber und zum Anerkennen dieser Verpflichtung durch den Emittenten hat eine Reihe von Nachteilen.

Der Hauptnachteil des herkömmlichen Verfahrens besteht darin, dass es keine interne Prozedur zur Konfliktauflösung aufweist und deshalb gegen Fälscher nicht geschützt ist. Ein unlauterer Karteninhaber kann beispielsweise die Erfüllung einer mit einer Karte verbundenen Verpflichtung wiederholt anfordern, indem er seine Anforderung mit einer neuen Anweisung versieht. Der Emittent kann dabei gegenüber Dritten nicht nachweisen, dass in diesem Fall die Karte vom Karteninhaber wiederholt benutzt wird. Andererseits kann ein unlauterer Emittent sich weigern, seine Verpflichtung anzuerkennen und zu erfüllen, indem er erklärt, dass die Verpflichtung gemäß dieser Karte von ihm unter Benutzung einer anderen Anweisung bereits erfüllt worden ist. Dabei kann der lautere Karteninhaber gegenüber Dritten nicht nachweisen, dass die Karte zuvor vom niemandem benutzt worden war. Dieser Nachteil ist dadurch bedingt, dass nach Beendigung einer Sitzung unter Benutzung des herkömmlichen Verfahrens weder beim Karteninhaber noch bei Emittenten Daten verbleiben, die sie nicht ohne Beteiligung der Gegenseite hätten bilden können und die als Beweis bei der Konfliktauflösung dienen könnten. Außerdem verbleibt die Karte, wenn der Emittent sich geweigert hat, seine Verpflichtung gemäß der Karte anzuerkennen, nach dem Ende der Sitzung unter Benutzung des herkömmlichen Verfahrens in den Händen des Karteninhabers in dem gleichen Zustand, in dem die Karte wäre, wenn der Emittent seine Verpflichtung gemäß der Karte anerkannt hätte, d.h. die Karte mit offenem Maskierer des Identifikators, wenn er zum zeitweiligen Verdecken des Identifikators der Karte benutzt wird.

Die Folge dieses Nachteils ist, dass ein Ausfall von Einrichtungen und Kommunikationskanälen sowie menschliches Versagen zu einer Situation führen können, in der ein lauterer Teilnehmer des herkömmlichen Verfahrens gegenüber dem Kontrahent als unlauter erscheint.

Ein weiterer Nachteil des herkömmlichen Verfahrens ist damit verbunden, dass die Kenntnis des Kartenidentifikators zum Anfordern der Erfüllung einer mit einer Karte verbundenen Verpflichtung ausreicht, und dass es immer einen Zeitraum gibt, während dessen der Identifikator sich in ungeschützter Form befindet. Ein gewandter Betrüger, dem der Kartenidentifikator bekannt geworden ist, kann früher als der legitime Karteninhaber die Erfüllung einer mit der Karte verbundenen Verpflichtung anfordern. Der Betrüger kann beispielsweise den Identifikator "über die Schulter" lesen oder ihn, während der Identifikator zum Emittenten übertragen wird, abfangen (, wenn der Übertragungskanal nicht geschützt ist).

## Offenbarung der Erfindung

Die Aufgabe, auf deren Lösung die vorliegende Erfindung gerichtet ist, besteht in der Angabe eines sicheren Verfahrens zum Anfordern der Erfüllung einer mit einer Karte verbundenen Verpflichtung durch den Karteninhaber und zum Anerkennen dieser Verpflichtung durch den Emittenten, das eine Fernkommunikation zulässt. Die Sicherheit des Verfahrens wird insbesondere durch eine Prozedur der Konfliktauflösung erreicht. Die Prozedur der Konfliktauflösung hat gegenüber Dritten Nachweiswirkung und gewährt vollen Schutz der Interessen derjenigen Seite, die streng im Rahmen des Verfahrens handelt.

Eine weitere durch die vorliegende Erfindung gelöste Aufgabe besteht in der Milderung der negativen Folgen von Ausfällen von Einrichtungen und Kommunikationskanälen sowie menschlichem Versagen.

Eine weitere durch die vorliegende Erfindung gelöste Aufgabe besteht in der Vorbeugung vor unerlaubten Benutzung der Karte, falls der Kartenidentifikator durch Betrüger abgefangen worden ist.

Das Wesen des erfindungsgemäßen Verfahrens besteht in folgendem.

Der Emittent gibt Karten aus, deren jede einen Identifikator und einen diesem zugeordneten Verifikator aufweist, der zumindest teilweise mittels eines Maskierers verdeckt ist. Als Verifikator der Karte werden zusätzliche Daten bezeichnet, die dem Kartenidentifikator entsprechen. Die Zuordnungsregel von Kartenverifikators und Identifikator muß so sein, dass es für einen Anderen als den Emittenten praktisch nicht möglich ist, anhand des Identifikators den ihm entsprechende Verifikator zu erkennen, wenn diesem Anderen nicht im voraus bekannt war, welcher Verifikator dem vorliegenden Identifikator entspricht. Für einen Anderen als den Emittenten sollte es insbesondere praktisch nicht möglich sein, anhand des Identifikators der Karte den ihr entsprechenden Verifikator zu erkennen, ohne den Maskierer des Verifikators zu öffnen.

Mit jeder Karte wird eine bestimmte Verpflichtung des Emittenten verbunden, beispielsweise mittels Benachrichtigung der potentiellen Karteninhaber, mittels Aufbringens verschiedener Aufschriften auf die Karte und mittels anderer üblicher Verfahren. Dann werden die Karten unter den Kartenerwerbern vertrieben. Der Kartenerwerber muß beim Erhalt der Karte prüfen, ob der Maskierer, der den Verifikator der Karte verdeckt, sich im geschlossenen Zustand befindet.

Der Kartenerwerber, der im Besitz einer Karte ist, fordert die Erfüllung einer mit der Karte verbundenen Verpflichtung des Emittenten und der Emittent anerkennt diese Verpflichtung, indem er folgende Schritte durchführt:

(1) Der Karteninhaber liest von der Karte deren Identifikator ab und macht gegenüber dem Emittenten die den Kartenidentifikator und eine Anweisung zur Erfüllung der Verpflichtung des Emittenten umfassende Forderung der Erfüllung einer mit einer Karte verbundenen Verpflichtung geltend;

(2) der Emittent prüft, dass er früher keine unterzeichnete Antwort gegeben hat, die den vom Karteninhaber übermittelten Kartenidentifikator mit einer Anweisung verbindet, die mit der übermittelten Anweisung nicht übereinstimmt, erstellt eine Antwort an den Karteninhaber, die den übermittelten Identifikator und die Anweisung verbindet, unterzeichnet die erstellte Antwort und übermittelt die unterzeichnete Antwort dem Karteninhaber;

(3) der Karteninhaber prüft die Unterschrift des Emittenten unter der Antwort sowie, ob die unterzeichnete Antwort den Identifikator und die Anweisung verbindet, die er dem Emittenten übermittelt hatte, liest danach von der Karte den Verifikator ab und übermittelt den Verifikator dem Emittenten;

(4) der Emittent prüft, ob der durch den Karteninhaber übermittelte Verifikator dem durch den Karteninhaber übermittelten Identifikator entspricht;

(5) der Emittent anerkennt die Verpflichtung, die der Verpflichtung gemäß der Karte und der Anweisung des Karteninhaber entspricht.

Um eine gegenseitige Beeinflussung verschiedener Sitzungen der beschriebenen Prozedur zu vermeiden, darf der Emittent nicht zum Schritt (2) übergehen, solange in einer anderen Sitzung der beschriebenen Prozedur die Durchführung des Schrittes (2) andauert.

Die Schritte (2) bis (4) des vorliegenden Verfahrens entsprechen dem Schritt (2) des herkömmlichen Verfahrens (Prüfung der Gültigkeit der Karte anhand der vom Karteninhaber übermittelten Identifikator und Anweisung) und ersetzen ihn.

Die Antwort des Emittenten muß übermittelte(n) Identifikator und Anweisung so verbinden, dass es praktisch nicht möglich ist, einen der ausgegebenen Karte entsprechenden Identifikator und eine Anweisung zu finden, die zusammen mit den übermittelten Identifikator und Anweisung übereinstimmen, die ebenfalls durch diese Antwort gebunden sind (unter der Voraussetzung, dass der übermittelte Identifikator auch der ausgegebenen Karte entspricht). Die Antwort kann beispielsweise mit der Anforderung des Karteninhabers übereinstimmen. In einer anderen Variante kann die Antwort aus der Verkettung der Anweisung und eines Teils des Identifikators bestehen, der eindeutig ein Exemplar einer Karte definiert. In einer anderen Variante kann die Antwort mit dem Wert irgendeiner kryptographischen Hash-Funktion übereinstimmen, die für die Verkettung von Identifikator und Anweisung berechnet worden ist [4, 5, 7].

Die durch den Emittenten vorgenommene Prüfung, ob er jemandem schon früher eine unterzeichnete Antwort übermittelt hat, die den vom Karteninhaber übermittelten Identifikator mit einer Anweisung verbindet, die mit der vom Karteninhaber übermittelten Anweisung nicht übereinstimmt, kann nach verschiedenen Verfahren durchgeführt werden. Der Emittent kann beispielsweise eine Liste der Antworten führen, die bereits unterzeichnet und jemandem übermittelt wurden, und bei der Prüfung eine Suche anhand dieser Liste durchführen.

Wenn der Emittent aus irgendeinem Grund den nächsten Schritt in der beschriebenen Prozedur nicht durchführen kann oder wenn die nachfolgende Prüfung ein negatives Ergebnis hat, so beendet der Emittent die Weiterführung der beschriebenen Prozedur, und er kann dem Karteninhaber eine Benachrichtigung darüber übermitteln.

Wenn der Karteninhaber aus irgendeinem Grund seinen nächsten Schritt in der beschriebenen Prozedur nicht durchführen kann oder will oder wenn die nachfolgende Prüfung ein negatives Ergebnis hat, so kann der Karteninhaber eine Konfliktauflösungs-Prozedur in Gang setzen.

Die Konfliktauflösungsprozedur besteht in Folgendem. Wenn der Karteninhaber nach dem mit der vorliegenden Erfindung offenbarten Verfahren gehandelt hat, so hat er entweder eine Karte, deren Verifikator-Maskierer sich im geschlossenen Zustand befindet, oder er hat die Karte und die Unterschrift des Emittenten unter dessen Antwort, die den Identifikator dieser Karte und die Anweisung zur Erfüllung der Verpflichtung verbindet. Deshalb muß der Karteninhaber, wenn er einen Konflikt beginnt, entweder eine Karte vorweisen, deren Verifikator-Maskierer sich im geschlossenen Zustand befindet, oder die Karte und die Unterschrift des Emittenten unter dessen Antwort, die den Identifikator dieser Karte und die Anweisung zur Erfüllung der Verpflichtung verbindet. In ersterem Falle zieht der Emittent die Karte ein und anerkennt die mit dieser Karte verbundene Verpflichtung, die mit der Anweisung ergänzt ist, die vom Karteninhaber in der vorliegenden Prozedur der Konfliktauflösung übermittelt wurde. Im zweiten Falle vergewissert sich der Emittent, dass der Verifikator-Maskierer offen ist, und wenn er geschlossen ist, muß der Karteninhaber ihn öffnen. Danach anerkennt der Emittent die mit der Karte verbundene und mit der Anweisung ergänzte Verpflichtung, die mittels der vom Emittenten unterzeichneten Antwort mit dem Identifikator der vorliegenden Karte verbunden wurde.

In einer zweiten Variante eines Konflikts, wenn der Karteninhaber Karte und Unterschrift des Emittenten unter dessen Antwort präsentiert, die den Identifikator dieser Karte und die Anweisung zur Erfüllung der Verpflichtung verbindet, ist auch eine andere Prozedur der Konfliktauflösung möglich, die folgendes vorsieht. Der Emittent prüft, ob die Verpflichtung, die mit der Karte verbunden und mit der Anweisung ergänzt ist, die mittels der unterschriebenen Antwort des Emittenten mit dem Identifikator dieser Karte verbunden war, von ihm anerkennt wurde. Danach zieht der Emittent die Karte aus dem Verkehr und anerkennt die mit dieser Karte verbundene Verpflichtung, die mit der Anweisung ergänzt ist, die vom Karteninhaber in der vorliegenden Prozedur der Konfliktauflösung übermittelt wurde.

Bei der praktischen Realisierung des Verfahrens sind auch andere Abwandlungen der Prozedur der Konfliktauflösung möglich.

Die Anweisung zur Erfüllung der Verpflichtung, die vom Karteninhaber in der Prozedur der Konfliktauflösung übermittelt worden ist, kann von der Anweisung abweichen, die in der Prozedur der Anforderung der Erfüllung der Verpflichtung übermittelt wurde, die durch diesen Konflikt beendet wurde. Außerdem kann die Anzahl der in der Prozedur der Konfliktauflösung zulässigen Anweisungen zur Erfüllung der Verpflichtung von der Anzahl der Anweisungen abweichen, die im Rahmen der Prozedur der Anforderung der Erfüllung der Verpflichtung zulässig sind. Diese Anzahl kann auch von der Stufe abhängig sein, in der sich der Konflikt befindet. Beispielsweise kann die vom Karteninhaber in der Prozedur der Konfliktauflösung übermittelte Anweisung die Aufforderung zur Rückzahlung des für die Karte bezahlten Geldes und die Aufforderung zur Zahlung einer Konventionalstrafe wegen Nichterfüllung der Verpflichtung umfassen.

Die Sicherheit des beschriebenen Verfahrens wird insbesondere auch dadurch erreicht, dass, auch wenn der Identifikator der Karte einem Betrüger bekannt wird und wenn es diesem gelingt, die Forderung nach Erfüllung der Verpflichtung gemäß der Karte an den Emittenten früher als der Karteninhaber zu präsentieren, weder dem Karteninhaber noch dem Emittenten ein unmittelbarer Schaden verursacht wird und der Betrüger keinen unmittelbaren Gewinn hat. Tatsächlich ist dem Betrüger nicht der Verifikator der Karte bekannt, weshalb er die Prozedur der Anforderung zur Erfüllung der Verpflichtung nicht zu Ende führen kann. Andererseits wird bei unterschiedlichen Anweisungen des Betrügers und des Karteninhabers der Emittent, wenn der Karteninhaber seine Forderung zur Erfüllung der Verpflichtung gemäß der Karte präsentiert, herausfinden, dass er bereits früher eine unterzeichnete Antwort, die den Kartenidentifikator mit einer sich von der übermittelten Anweisung unterscheidenden Anweisung verbindet, gegeben hat, und er wird die Weiterführung der beschriebenen Prozedur der Anforderung zur Erfüllung der Verpflichtung und zur Anerkennung der Verpflichtung beenden. Die entstandene Situation kann mit Hilfe der Prozedur der Konfliktauflösung erledigt werden. Das bedeutet auch, dass es wünschenswert ist, den Kartenidentifikator zu schützen.

Um die Möglichkeit des Erratens des Kartenidentifikators auszuschliessen, darf die Anzahl der Identifikatoren ausgegebener Karten nur einen geringfügigen Teil aller möglichen Identifikatoren ausmachen. In diesem Fall ist der Betrüger nicht imstande, den Identifikator auch nur einer der ausgegebenen Karten anders anzugeben als durch das Ablesen des Identifikators von der Karte.

Um die Möglichkeit eines unbemerkten Ablesens des Kartenidentifikators durch einen Betrüger, noch bevor die Karte den Karteninhaber erreicht, zu verhindern, kann der Kartenidentifikator zumindest teilweise mit Hilfe eines Maskierers verdeckt werden. In diesem Fall muß der Karteninhaber beim Erhalt der Karte auch prüfen, ob der den Kartenidentifikator verdeckende Maskierer im geschlossenen Zustand ist.

Wenn zur Verdeckung des Kartenidentifikators ein Maskierer benutzt wird, so kann der Karteninhaber den Verifikator-Maskierer versehentlich früher als den Identifikator-Maskierer öffnen. Ein solcher Fehler nimmt dem Karteninhaber nicht die Möglichkeit, die mit der Karte verbundene Verpflichtung anzufordern, entzieht ihm aber den Schutz gegen einen böswilligen Emittenten oder gegebenenfals gegen Hardwarefehler. Um diese Fehler zu vermeiden, kann die Ausbildung der Karte und des Maskierers so sein, dass ein Öffnen des Verifikator-Maskierers praktisch nicht möglich ist, ohne vorher den Identifikator-Maskierer zu öffnen.

Die Karte kann beispielsweise aus einem geschlossenen Umschlag bestehen, innerhalb dessen sich ein zweiter Teil der Karte befindet, die den Identifikator und den Verifikator aufweist, wobei der Verifikator mit einem Maskierer verdeckt ist. In diesem Fall ist der Umschlag der Identifikator-Maskierer, wobei ein Öffnen des Verifikator-Maskierers praktisch nicht möglich ist, ohne vorher den Identifikator-Maskierer, d.h. den Umschlag, zu öffnen.

Die Ausbildung der Karte und der Maskierer kann so sein, dass der Kartenverifikator die Eigenschaften eines Identifikators besitzt und der Identifikator die Eigenschaften eines Verifikators besitzt gegenüber dem Kartenverifikator, der als Identifikator benutzt wird. In diesem Fall kann der Karteninhaber selbst wählen, welche verdeckten Daten der Karte als Identifikator und welche als Verifikator benutzt werden. Dabei muß der Emittent die Möglichkeit haben, anhand der vom Karteninhaber übermittelten Anforderung zur Erfüllung der Verpflichtung zu ermitteln, welche Daten der Karte der Karteninhaber als Identifikator und welche als Verifikator benutzt. Beispielsweise können die Formate der zugehörigen Daten verschieden sein, und der Emittent erfährt anhand des Formats, welche Daten der Karte der Karteninhaber als Identifikator benutzt und welche als Verifikator. Für solche Karten sind Fehler des Karteninhabers dergestalt, dass er den Maskierer des Verifikators früher als den Maskierer des Identifikators öffnet, ohne Bedeutung, weil Verifikator und Identifikator symmetrische Rollen spielen. Solche Karten können auch in Spielanwendungen und in stimulierenden Werbekampagnen verwendet werden, wo die Wahl der Reihenfolge des Öffnens der Maskierer durch den Karteninhaber den Gewinn beeinflusst.

Die Karte kann aus mehreren physikalisch nicht miteinander verbundenen Teilen bestehen, die jedoch logisch miteinander verbunden sind. Jeder Teil kann beispielsweise mehrere Hilfsdaten aufweisen, die eindeutig solche Teile definieren, die zusammengenommen eine Karte bilden. Solche Karten können in Spielanwendungen und in stimulierenden Werbekampagnen verwendet werden, wo der Karteninhaber zunächst die Kartenbestandteile zusammensetzen muß.

Wenn die Zuordnungsregel des Verifikators der Karte zu derem Identifikator so ist, dass der Karteninhaber selbständig Paare aus einem Identifikator und einem ihm entsprechenden Verifikator bilden kann, so muß der Emittent, bevor er seine Verpflichtung anerkennt, zusätzlich den übermittelten Identifikator auf Übereinstimmung mit dem Identifikator einer der ausgegebenen Karten prüfen. Diese Prüfung kann der Emittent auch durchführen, um den Karteninhaber von seinem falschen Ablesen des Kartenidentifikators benachrichtigen zu können sowie um das Aufdecken dieses Fehlers zu beschleunigen. Der Emittent muß Mittel haben, um feststellen zu können, ob der übermittelte Identifikator mit dem Identifikator einer der ausgegebenen Karten übereinstimmt. Vorzugsweise muß ein solches Mittel Geheimnis des Emittenten sein. Als ein solches Mittel kann der Emittent beispielsweise eine Liste der Identifikatoren aller ausgegebenen Karten verwenden.

Um das Vertraulichkeitsniveau zu erhöhen sowie um ein Abfangen eines Identifikators durch einen Betrüger während der Übermittlung der Anforderung zur Erfüllung der Verpflichtung gemäß der Karte zum Emittenten zu verhindern, können beide Seiten ihre Nachrichten verschlüsseln. Die Auswahl konkreter Verschlüsselungsverfahren ist für die Erfindung nicht wesentlich. Beispielsweise können die dem Emittenten zu übermittelnden Daten vom Karteninhaber mit Hilfe eines öffentlichen Schlüssels des Emittenten im Rahmen eines im voraus festgelegten asymmetrischen Verschlüsselungssystems [4, 5] verschlüsselt werden. Der Emittent kann die dem Karteninhaber zu übermittelnden Daten beispielsweise mit Hilfe von Schlüsseln verschlüsseln, die der Karteninhaber in seine Nachrichten für den Emittenten zusätzlich aufnimmt.

Die Anweisung zur Erfüllung der mit der Karte verbundenen Verpflichtung kann Daten umfassen, die eine die Erfüllung der vom Emittenten anerkannten Verpflichtung kontrollierende Person identifizieren. Als solche Daten kann insbesondere der öffentliche Schlüssel der Person in einem im voraus festgelegten System der elektronischen Unterschrift benutzt werden. Mit Hilfe von Befehlen, die mit der elektronischen Unterschrift unterzeichnet sind, die dem öffentlichen Schlüssel der Person entspricht, kann diese Person beispielsweise den Vorgang der Erfüllung der vom Emittenten anerkannten Verpflichtung steuern.

Zur Erleichterung der Prüfung der Zuordnung des vom Karteninhaber übermittelten Kartenverifikators zu dem vom Karteninhaber übermittelten Identifikator durch den Emittenten kann der Karteninhaber dem Emittenten zusammen mit dem Verifikator nochmals den Identifikator oder einen geeigneten Teil des Identifikators übermitteln.

Um die Möglichkeit zu haben, den Karteninhaber von einer fehlerhaften Bildung einer Anweisung zur Erfüllung einer mit der Karte verbundenen Verpflichtung durch ihn zu unterrichten, sowie um das Erkennen eines solchen Fehlers zu beschleunigen, kann der Emittent zusätzlich die übermittelte Anweisung daraufhin kontrollieren, ob diese vorbestimmten und vorveröffentlichten Richtigkeitskriterien entspricht.

Die Gültigkeit der Unterschrift unter einer Antwort des Emittenten kann durch bestimmte Bedingungen eingeschränkt werden. Beispielsweise können die Gültigkeitsbedingungen der Unterschrift unter einer Antwort von dem benutzten System der Unterschrift bestimmt oder vom Emittenten festgelegt werden. Eine solche Bedingung kann insbesondere eine Frist sein, nach deren Ablauf die Unterschrift die Gültigkeit verliert. Die Gültigkeitsbedingungen der Unterschrift können auch in der unterschriebenen Antwort des Emittenten enthalten sein. Falls Bedingungen vorliegen, welche die Gültigkeit der Unterschrift einschränken, kann der Emittent dem Karteninhaber eine neue unterzeichnete Antwort geben, die eine bestimmte Anweisung mit dem früher erhaltenen Identifikator verbindet, wenn die Verpflichtung noch nicht vom Emittenten anerkannt ist (der Karteninhaber hat den Kartenverifikator nicht übermittelt) und die Unterschrift unter der früher übermittelten Antwort ihre Kraft verloren hat. Der Karteninhaber, der vor dem Öffnen des Verifikator-Maskierers entdeckt hat, dass die Gültigkeitsbedingungen der Unterschrift nicht erfüllt sind, hat die Möglichkeit, eine neue unterschriebene Antwort des Emittenten zu erhalten und insbesondere eine alte Anweisung durch eine neue zu ersetzen.

Wenn der Kartenidentifikator einem Betrüger bekannt wird, noch bevor der Inhaber der Karte diese benutzt, kann der Betrüger die Forderung zur Erfüllung der kartengemäßen Verpflichtung an den Emittenten vor dem Karteninhaber stellen. Solche Handlungen des Betrügers werden ihm keine unmittelbaren Vorteile bringen und dem Emittenten oder dem legitimen Kartenbesitzer keinen unmittelbaren Schaden verursachen. Sie werden jedoch zur Unterbrechung der Prozedur zum Anfordern der Erfüllung einer Verpflichtung führen, und die Beteiligten müssen zu der Prozedur der Konfliktauflösung übergehen. Deshalb ist es vorzuziehen, dass der Karteninhaber den Identifikator seiner Karte geheim hält bis zum Erhalt eines positiven Ergebnisses der Prüfung der Emittentenunterschrift unter die Antwort, die den Identifikator der Karte und die Anweisung zur Erfüllung der Verpflichtung enthält, die er dem Emittenten in seiner Forderung übermittelt hat.

Um die Anzahl der Konflikte zu senken, die durch Störungen in den Kommunikationskanälen bedingt sind, kann der Karteninhaber, wenn er keine Antwort auf seine Forderung erhalten hat, erneut seine Forderung an den Emittenten senden, die kartengemäße Verpflichtung zu erfüllen. Dabei muß der Emittent, falls er erkennt, dass die übermittelte Forderung einen Identifikator enthält, für den schon früher eine unterzeichnete Antwort gegeben wurde, die übermittelte Anweisung zur Erfüllung der Verpflichtung mit derjenigen Anweisung vergleichen, die mit dem vorliegenden Identifikator in der früher unterzeichneten und abgesandten Antwort verbunden war. Falls die Anweisungen übereinstimmen, kann dem Karteninhaber erneut die vorherige unterzeichnete Antwort gegeben werden.

Nach der Prüfung der Zuordnung des vom Karteninhaber übermittelten Verifikators zu dem vom Karteninhaber übermittelten Identifikator kann der Emittent dem Karteninhaber eine Fehlernachricht oder eine Nachricht über die Anerkennung seiner Verpflichtung senden. Um die Anzahl der durch Störungen in den Kommunikationskanälen bedingten Konflikte zu vermindern, kann der Karteninhaber dem Emittenten wiederholt den Verifikator seiner Karte senden, wenn er keine Fehlernachricht oder Nachricht über das Anerkennen seiner Verpflichtung erhalten hat.

Damit dem Karteninhaber kein Betrüger eine gefälschte Fehlernachricht oder eine gefälschte Nachricht im Namen des Emittenten vorlegen kann, die den Karteninhaber irreführen und zur Einleitung eines Konflikts veranlassen, können die Nachrichten des Emittenten vom Emittenten unterzeichnet sein.

Die vom Emittenten unterzeichnete Antwort kann zusätzliche Daten aufweisen, die beispielsweise mit der Prozedur der Erfüllung der Verpflichtung verbunden sind. Die Antwort kann insbesondere Passwörter, die Gültigkeitsdauer der Unterschrift unter der Antwort, nach deren Ablauf die Unterschrift die Kraft verliert, usw. aufweisen.

**Kurze Beschreibung der Zeichnungen**

Fig. 1    stellt eine Bankkarte dar, bei der die Maskierer des Identifikators und des Verifikators sich im offenen Zustand befinden;

Fig. 2    stellt eine Bankkarte dar, bei der die Maskierer des Identifikators und des Verifikators sich im geschlossenen Zustand befinden;

Fig. 3    stellt eine Bankkarte dar, bei der sich der Maskierer des Identifikators im offenen Zustand befindet, während der Maskierer des Verifikators sich im geschlossenen Zustand befindet;

Fig. 4    stellt einen Lotterieschein dar, bei dem die Maskierer des Identifikators (des Passwortes) und des Verifikators sich im offenen Zustand befinden;

Fig. 5    stellt einen Lotterieschein dar, bei dem die Maskierer des Identifikators (des Passwortes) und des Verifikators sich im geschlossenen Zustand befinden.

Fig. 6    stellt einen Lotterieschein dar, bei dem sich der Maskierer des Identifikators (des Passwortes) im offenen Zustand befindet während sich der Maskierer des Verifikators im geschlossenen Zustand befindet.

**Beste Variante einer Ausbildung der Erfindung**

Der Emittent gibt Karten aus, deren jede einen Identifikator und einen ihm zugeordneten Verifikator V aufweist. Der Identifikator der Karte besteht aus der Kartennummer N und einem Passwort P. Das Passwort P ist mit Hilfe eines Identifikator-Maskierers verdeckt, und der Verifikator der Karte ist mit Hilfe eines Verifikator-Maskierers verdeckt. Bei der Herstellung der Karten werden ihre Nummern der Reihe nach in einem Bereich gewählt und das Passwort der Karte und ihr Verifikator mit Hilfe der Kartennummer N gemäß folgender Regel bestimmt: $P = H_1(N,R)$, $V = H_2(N,R)$, worin $H_1$ und $H_2$ kryptographische Hash-Funktionen mit einem geheimen Schlüssel R [4,5] sind. Die Hash-Funktionen $H_1$ und $H_2$ werden so gewählt, dass es praktisch nicht möglich ist, ohne Kenntnis von R anhand des Identifikators, d. h. anhand der Kartennummer N und des Passworts P, den ihm entsprechenden Verifikator zu ermitteln, wenn nicht im voraus bekannt ist, welcher Verifikator dem vorliegenden Identifikator entspricht. Der Schlüssel R wird vom Emittenten mit Hilfe eines Zufallsgenerators erzeugt und geheim gehalten.

Diese Aufbauweise der Identifikatoren und Verifikatoren der Karten führt dazu, dass es für einen Beteiligten, der nicht Emittent ist, praktisch nicht möglich ist, anhand des Kartenidentifikators ihren Verifikator zu ermitteln, ohne den Maskierer des Verifikators zu öffnen. Andererseits kann der Emittent anhand des übermittelten Identifikators leicht feststellen, ob dieser irgendeiner ausgegebenen Karte entspricht. Dazu hat er nur zu prüfen, dass die Nummer sich in dem erforderlichen Bereich befindet, und das übermittelte Passwort mit dem Wert zu vergleichen, der anhand von Identifikator (Nummer) und Geheimschlüssel R errechnet wird. Der Emittent kann auch leicht feststellen, ob der übermittelte Verifikator dem übermittelten Identifikator entspricht, weil der Verifikator anhand des Identifikators (Nummer) und des Geheimschlüssels R errechnet wird.

Die im Rahmen der vorliegenden Erfindung durchgeführten Handlungen des Emittenten und der Karteninhaber hängen nicht von der Auswahl der konkreten Form des Unterschriftssystem ab, in dessen Rahmen der Emittent seine Antworten (Nachrichten) unterzeichnet. Eine bevorzugte Variante des Unterschriftssystems stellt aber eine beliebige Variante eines digitalen Unterschriftssystems [4-6] dar, weil in diesem Fall die Unterschrift unter den Daten über elektronische Kommunikationskanäle übertragen werden kann.

Der Emittent wählt im Rahmen eines digitalen Unterschriftssystems, beispielsweise RSA [4,5], einen ersten geheimen Schlüssel aus, anhand dessen er die digitale Unterschrift unter den verschiedenen Daten erzeugt, und einen ihm entsprechenden ersten öffentlichen Schlüssel, anhand dessen die beteiligten Seiten die Unterschrift des Emittenten prüfen. Der Emittent wählt im Rahmen eines asymmetrischen Verschlüsselungssystems, zum Beispiel RSA [4,5], auch einen zweiten geheimen Schlüssel aus, anhand dessen er die empfangenen Nachrichten entschlüsselt, und einen ihm entsprechenden zweiten öffentlichen Schlüssel, anhand dessen die beteiligten Seiten die Nachrichten für den Emittenten verschlüsseln. Der erste und der zweite öffentliche Schlüssel ebenso wie die getroffene Wahl des digitalen Unterschriftssystems und des asymmetrischen Verschlüsselungssystems werden veröffentlicht (den beteiligten Seiten zur Kenntnis gebracht). Der Emittent veröffentlicht auch seine Absicht, seine Nachrichten an die Karteninhaber mit Hilfe von Sitzungsschlüsseln unter Benutzung eines symmetrischen Verschlüsselungsalgorithmus', beispielsweise IDEA [5, S.263], zu verschlüsseln.

Der Karteninhaber kann eine Anweisung zur Erfüllung der Verpflichtung bilden sowie kryptographysche Handlungen (Generierung von Sitzungsschlüsseln, Verschlüsseln, Entschlüsseln, Prüfung der elektronischen Unterschrift usw.) mit Hilfe einer geeigneten Einrichtung, beispielsweise eines Telefonapparats oder eines entsprechend programmierten Computers, durchführen.

Mit jeder Karte wird, beispielsweise durch Benachrichtigung der potentiellen Kartenerwerber, Aufbringen geeigneter Aufschriften auf die Karte und andere übliche Verfahren, die Verpflichtung des Emittenten verbunden. Danach werden die Karten unter den Kartenerwerbern vertrieben. Beim Erhalt der Karte muß der Karteninhaber prüfen, dass die das Passwort der Karte und deren Verifikator verdeckenden Maskierer sich im geschlossenen Zustand befinden.

Der Karteninhaber, der im Besitz einer Karte ist, fordert die Erfüllung einer mit der Karte verbundenen Verpflichtung des Emittenten, und der Emittent anerkennt diese Verpflichtung, indem er folgende Schritte durchführt:

(1) der Karteninhaber liest von der Karte deren Identifikator ab und sendet dem Emittenten die mit Hilfe des zweiten öffentlichen Schlüssels des Emittenten verschlüsselte Forderung nach Erfüllung einer Kartenverpflichtung, die den Kartenidentifikator, die Anweisung zur Erfüllung der Verpflichtung des Emittenten und einen ersten Sitzungsschlüssel umfasst;

(2) der Emittent entschlüsselt die erhaltene Forderung mit Hilfe des zweiten geheimen Schlüssels, prüft, ob der übermittelte Identifikator mit dem Identifikator einer der ausgegebenen Karten übereinstimmt, prüft, dass er früher keine unterzeichnete Antwort gegeben hat, die den vom Karteninhaber übermittelten Identifikator mit einer Anweisung verbindet, die mit der vom Karteninhaber übermittelten Anweisung nicht übereinstimmt, erstellt eine Antwort an den Karteninhaber, welche übermittelte Kartennummer und Anweisung verbindet, unterzeichnet die erstellte Antwort mit Hilfe des ersten geheimen Schlüssels, verschlüsselt die unterzeichnete Antwort mit Hilfe des übermittelten ersten Sitzungsschlüssels und sendet die unterzeichnete und verschlüsselte Antwort an den Karteninhaber;

(3) der Karteninhaber entschlüsselt die erhaltene Antwort mit Hilfe des ersten Sitzungsschlüssels, prüft die Unterschrift des Emittenten unter der Antwort mit Hilfe des ersten öffentlichen Schlüssels des Emittenten und prüft, ob die unterzeichnete Antwort die Kartennummer und diejenige Anweisung verbindet, die er dem Emittenten übermittelt hat, liest danach von der Karte den Verifikator ab und sendet den Verifikator zusammen mit der Kartennummer an den Emittenten;

(4) der Emittent prüft, ob der durch den Karteninhaber übermittelte Verifikator dem durch den Karteninhaber übermittelten Identifikator entspricht;

(5) der Emittent anerkennt die Verpflichtung, die der Kartenverflichtung und der Anweisung des Karteninhaber entspricht.

Um eine gegenseitige Beeinflussung verschiedener Sitzungen der beschriebenen Prozedur zu vermeiden, darf der Emittent nicht zu der Prüfung übergehen, ob er jemandem schon vorher eine unterzeichnete Antwort gegeben hat, die den vom Karteninhaber übermittelten Identifikator mit einer Anweisung verbindet, die mit der vom Karteninhaber übermittelten Anweisung nicht übereinstimmt, solange in einer anderen Sitzung der beschriebenen Prozedur die gleiche Prüfung, die Erstellung und Unterzeichnung einer Antwort an den Karteninhaber läuft.

Wenn der Emittent aus irgendeinem Grund einen in der beschriebenen Prozedur nächsten Schritt nicht durchführen kann oder wenn eine nachfolgende Prüfung ein negatives Ergebnis ergibt, so beendet der Emittent die Weiterführung der beschriebenen Prozedur und sendet dem Karteninhaber eine Benachrichtigung darüber.

**Gewerbliche Verwertbarkeit**

**Beispiel 1**

Dieses Beispiel veranschaulicht eine Realisierung des Verfahrens zum Anfordern der Erfüllung einer mit einer Karte verbundenen Verpflichtung durch den Karteninhaber und zum Anerkennen dieser Verpflichtung durch den Emittenten, bei der als Emittent eine Bank auftritt und als Karteninhaber ihr Kunde. Mit jeder Karte ist die Verpflichtung der Bank verbunden, 100 Rubel einem Konto gutzuschreiben, das von dem Kunden angegeben worden ist, in dessen Besitz sich die Karte befindet.

Vor der Kartenemission stellt die Bank eine vier Spalten aufweisende Prüftabelle zusammen, in welcher die Zeilenanzahl der Anzahl der ausgegebenen Karten entspricht. Obwohl die Bank praktisch eine beliebig große Anzahl von Karten ausgeben kann, wird der Fall der Ausgabe von 5 Karten betrachtet. In die Felder einer Spalte «Identifikator» der Prüftabelle werden paarweise verschiedene Zufallssätze aus acht Ziffern eingetragen, die mit Hilfe eines Zufallsgenerators erhalten worden sind. In die Felder einer Spalte «Verifikator» werden Zufallssätze aus zehn Ziffern eingetragen, die ebenfalls mit Hilfe eines Zufallsgenerators erhalten worden sind. Nach dem Ausfüllen der Felder dieser Spalten möge die Prüftabelle so aussehen, wie dies in der Tabelle I dargestellt ist.

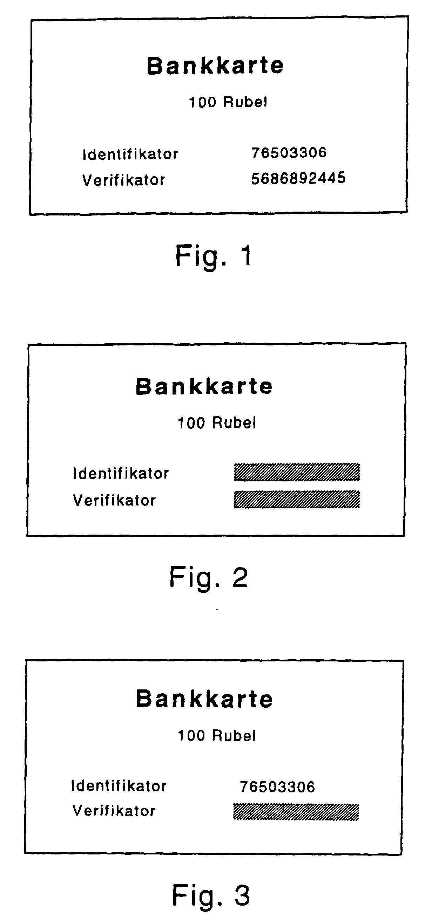

Des weiteren erstellt die Bank fünf Karten, deren jede zwei Felder «Identifikator» und «Verifikator» hat, wobei als Werte dieser Felder einer jeweils an der Reihe befindlichen Karte die entsprechenden Werte der jeweils an der Reihe befindlichen Zeile der Tabelle I dienen. In Fig. 1 ist eine Karte gezeigt, die der dritten Zeile dieser Tabelle entspricht. Die Felder der hergestellten Karten werden mit einer leicht entfernbaren, aber schwer wiederherstellbaren undurchsichtigen Farbe beschichtet, welche die Rolle des Maskierers spielt, woraufhin die Karten das in Fig. 2 gezeigte Aussehen erhalten.

Die Tabelle I ordnet den Verifikator einer Karte deren Identifikator nach folgender Regel zu: Der Verifikator entspricht dem Identifikator, wenn der Verifikator und der Identifikator der Karte in einer Zeile der Tabelle I liegen. Dabei entspricht nach dem Verfahren der Herstellung der Karten der Verifikator jeder Karte derem Identifikator. Die Bank muß die Tabelle I geheimhalten. Für einen Beteiligten, der nicht die Tabelle I besitzt, ist es praktisch nicht möglich, anhand des Identifikators der Karte deren Verifikator vor dem Öffnen des Maskierers des Verifikators zu ermitteln, weil Identifikatoren und Verifikatoren zufallsmäßig gewählt worden sind.

Die Bank wählt im Rahmen des Systems RSA [4, 5] zur digitalen Unterschrift einen geheimen Schlüssel D aus, mit dessen Hilfe sie die digitale Unterschrift unter den verschiedenen Daten bildet, und einen ihm entsprechenden öffentlichen Schlüssel E, mit dessen Hilfe die beteiligten Seiten die Unterschrift der Bank prüfen. Der öffentliche Schlüssel E wird ebenso wie die getroffene Wahl des Systems der digitalen Unterschrift veröffentlicht (den beteiligten Seiten zur Kenntnis gebracht).

Zur einheitlichen und eindeutigen Auslegung des Inhalts der Nachrichten durch die Beteiligten sowie zur Erleichterung der Automatisierung der Bearbeitung von Nachrichten veröffentlicht die Bank Formate aller Nachrichten, welche beide Seiten während der Anforderung der Erfüllung und Anerkennung der. Verpflichtung benutzen. Die Nachrichten können folgende Formate haben.

Format der Anforderung der Erfüllung der Kartenverpflichtung:       <<ID=\*,ACCOUNT=\*>>.
Format der Antwort der Bank:       <<ID=\*,ACCOUNT=\*>>.
Format der Übermittlung des Verifikators:       <<VERIFIER=\*>>.

In diesen Formaten bedeuten: ID den Kartenidentifikator, ACCOUNT das Konto, dem 100 Rubel gutzuschreiben sind, und VERIFIER den Kartenverifikator. Beim Senden der Nachrichten sind die Sternchen durch reale Werte der entsprechenden Größen zu ersetzen.

Die Verpflichtung der Bank, dem vom die Karte besitzenden Kunden genannten Konto 100 Rubel gutzuschreiben, wird mit jeder Karte durch Benachrichtigung potentieller Kunden und durch Aufbringen einer entsprechenden Aufschrift auf jede Karte verbunden. Dann werden die Karten unter den Kunden vertrieben.

Der Bankkunde möge eine Karte erworben haben, die der dritten Zeile der Tabelle I entspricht. Des weiteren möge der Kunde die Erfüllung der mit der Karte verbundenen Verpflichtung anfordern, wobei er als Konto, dem 100 Rubel gutzuschreiben sind, sein Konto 1001 bei dieser Bank genannt hat. Der Kunde öffnet zuerst den Maskierer des Identifikators, d.h. er entfernt die Farbschicht vom Feld «Identifikator» seiner Karte, ohne das Feld <<Verifikator>> zu berühren, wonach die Karte das in Fig.3 gezeigte Aussehen erhält und der Identifikator 76503306 zugänglich zum Ablesen wird. Dann gibt der Kunde Kartenidentifikator und Kontonummer, der 100 Rubel gutzuschreiben sind, in einen entsprechend programmierten Computer ein. Danach bildet der Computer die Anforderung <<ID=76503306, ACCOUNT=1001>>, in welcher der Teil ACCOUNT=1001 die Anweisung zur Erfüllung der Verpflichtung darstellt, und sendet die Anforderung an die Bank über ein öffentliches Kommunikationsnetz.

Nach Erhalt der Anforderung beginnt die Bank die Gültigkeitsprüfung der Karte anhand des übermittelten Identifikators und der Anweisung. Zunächst sucht die Bank den in der Anforderung enthaltenen Identifikator 76503306 in der Spalte «Identifikator» der Tabelle I und findet ihn in der dritten Zeile. Weiter prüft die Bank, ob das Feld <<Konto>> in der dritten Zeile nicht mit einem Wert besetzt ist, der sich von 1001 unterscheidet, d.h. ob die Bank früher keine unterzeichnete Antwort gegeben hat, die den Identifikator 76503306 mit einer sich von 1001 unterscheidenden Anweisung verbindet. Daraufhin trägt die Bank in das Feld «Konto» die übermittelte Kontonummer 1001 ein. Die Prüftabelle erhält das in der Tabelle II dargestellte Aussehen.

Des weiteren bildet die Bank die Antwort <<ID=76503306,ACCOUNT=1001>>, unterzeichnet sie mit ihrem geheimen Schlüssel D und sendet die unterzeichnete Antwort an den Kunden über ein öffentliches Kommunikationsnetz.

Nach Erhalt der unterzeichneten Antwort prüft der Kunde die Unterschrift der Bank unter der Antwort mittels des öffentlichen Schlüssels E der Bank und prüft, ob die Antwort so aussieht: <<ID=76503306,ACCOUNT=1001>>. Anschließend öffnet der Kunde den Verifikator-Maskierer, d.h. er entfernt die Farbschicht vom Feld <<Verifikator>> seiner Karte, wonach die Karte das in der Fig.1 dargestellte Aussehen erhält und der Verifikaror 5686892445 der Karte dem Ablesen zugänglich wird. Danach bildet der Kunde mit Hilfe des Computers die Verifikationsnachricht «VERIFIER=5686892445» und sendet die Verifikationsnachricht an die Bank über ein öffentliches Kommunikationsnetz.

Nach Erhalt des Verifikationsnachricht sucht die Bank den in der Verifikationsnachricht enthaltenen Verifikator 5686892445 in der Spalte <<Verifikator>> der Tabelle II und findet ihn in der dritten Zeile. Weiter prüft die Bank, ob das Feld «Konto» in der dritten Zeile nicht leer ist, d.h. ob die Bank früher eine Anforderung erhalten hat und der Verifikator 5686892445 dem Identifikator dieser Anforderung entspricht. In unserem Beispiel ist die Zuordnung vorhanden, weshalb die Bank ihre Verpflichtung gemäß der Karte mit dem Identifikator 76503306 anerkennt, die mit der entsprechenden Anweisung ergänzt ist, und füllt als Zeichen dessen das Feld «Anerkennung» aus, wie dies in Tabelle III gezeigt ist.

Aufgrund ihrer Anerkennung erfüllt die Bank die Verpflichtung, die der Kartenverpflichtung und der Anweisung des Karteninhabers entspricht, d.h. sie schreibt 100 Rubel dem Konto 1001 gut.

**Beispiel 2**

Dieses Beispiel veranschaulicht eine Realisierung des Verfahrens zum Anfordern der Erfüllung einer mit einer Karte verbundenen Verpflichtung durch den Karteninhaber und zum Anerkennen dieser Verpflichtung durch den Emittenten, bei der als Emittent ein Lotterieveranstalter auftritt und als Karteninhaber ein Lotterieteilnehmer; die Lotteriescheine spielen die Rolle der Karten. Mit jedem Lotterieschein ist die Verpflichtung des Lotterieveranstalters verbunden, den Gewinn unter der vom Lotterieteilnehmer, der den Lotterieschein erworben hat, angegebenen Adresse auszureichen.

Vor der Emission der Lotteriescheine erstellt der Lotterieveranstalter mit Hilfe eines Zufallsgenerators einen Zufallssatz R aus zweiunddreißig Sedezimalziffern. Die Sedezimalziffern sind 0,1,2,3,4,5,6,7,8,9,A,B,C,D,E,F. Er möge folgenden Satz erhalten:

R=16397D2AB474D3EC56AE22EB93ED3C17.

Den Satz R muß der Veranstalter geheim halten.

Des weiteren erstellt der Veranstalter 100.000 Lotteriescheine, deren jeder drei Felder «Nummer», <<Passwort>> und <<Verifikator>> aufweist. Die Werte der Felder «Nummer» und <<Passwort>> bilden zusammen den Identifikator des Scheins. Als Wert des Feldes «Nummer» wird eine fortlaufende Nummer aus dem Bereich von 00000 bis 99999 benutzt (führende Nullen sind ein Teil der Nummer). Somit besteht die Nummer aus fünf Dezimalziffern. Als Wert des Feldes <<Passwort>> des Scheines mit der Nummer N werden die ersten zehn Sedezimalziffern der Größe $H(N||R)$ benutzt, wo H eine Hash-Funktion SHA-1 [5, S.348] ist und $||$ die Verkettung von Bitabschnitten bezeichnet. Als Wert des Feldes <<Verifikator>> des Scheines mit der Nummer N werden die letzten zehn Sedezimalziffern der Größe $H(N||R)$ benutzt. Somit stellt der aus einer Nummer N und einem Passwort P bestehende Identifikator den Identifikator des ausgegebenen Scheines dar, wenn N fünf Dezimalziffern (einschließlich führender Nullen) enthält und P übereinstimmt mit den ersten zehn Sedezimalziffern der Größe $H(N||R)$. Der Verifikator V entspricht dem aus der Nummer N und dem Passwort P bestehenden Identifikator, wenn V mit den letzten zehn Sedezimalziffern der Größe $H(N||R)$ übereinstimmt. Dabei entspricht gemäß dem Verfahren zur Herstelluung von Lotteriescheinen der Verifikator jedes Scheines seinem Identifikator. Für einen Beteiligten, der nicht im Besitz des Sedezimalziffern-Satzes R ist, ist es praktisch nicht möglich, anhand des Identifikators der Karte deren Verifikator vor dem Öffnen des Verifikator-Maskierers zu ermitteln, was mit den Eigenschaften der Hash-Funktion SHA-1 [4,5] gewährleistet wird.

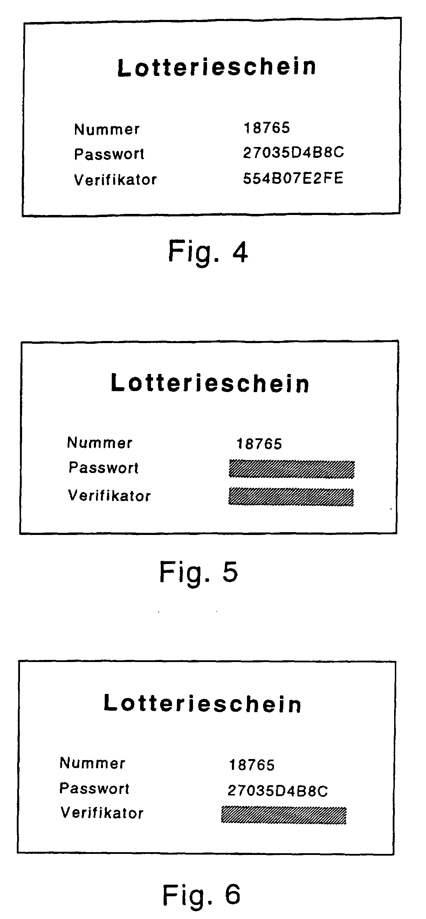

In der Fig. 4 ist ein Schein mit der Nummer 18765 gezeigt. Da

$$H(1876516397D2AB474D3EC56AE22EB93ED3C17) =$$

$$27035D4B8C0CE7DD2A8D1EB9AB2BC1554B07E2FE,$$

bedeutet das Passwort dieses Scheins 27035D4B8C, und der Verifikator ist 554B07E2FE.

Die Felder <<Passwort>> und <<Verifikator>> der hergestellten Scheine werden mit einer Schicht leicht entfernbarer, aber schwer wiederherstellbarer nichtdurchsichtiger Farbe versehen, die die Rolle des Maskierers spielt, wonach die Scheine ein Aussehen erhalten, wie dies in Fig. 5 gezeigt ist. So ist der Schein-Identifikator mit dem Maskierer nur teilweise verdeckt.

Der Veranstalter wählt im Rahmen des Systems RSA [4, 5] zur digitalen Unterschrift einen geheimen Schlüssel D1 aus, mit dessen Hilfe er die digitale Unterschrift unter die verschiedenen Daten bildet, und einen ihm entsprechenden öffentlichen Schlüssel E1, mit dessen Hilfe die beteiligten Seiten die Unterschrift des Veranstalters prüfen. Der Veranstalter wählt außerdem im Rahmen des Systems RSA [4, 5] zum asymmetrischen Verschlüsseln einen geheimen Schlüssel D2 aus, mit dessen Hilfe er die empfangenen Nachrichten entschlüsselt, sowie einen ihm entsprechenden öffentlichen Schlüssel E2, mit dessen Hilfe die beteiligten Seiten die Nachrichten für den Veranstalter verschlüsseln. Die öffentlichen Schlüssel E1 und E2 werden ebenso wie die getroffene Wahl des Systems der digitalen Unterschrift und des Systems des asymmetrischen Verschlüsselns veröffentlicht (den beteiligten Seiten zur Kenntnis gebracht). Der Veranstalter veröffentlicht auch seine Absicht, seine Nachrichten an die Lotterieteilnehmer mit Hilfe von Sitzungsschlüsseln unter Benutzung des Algorithmus' IDEA [5, S. 263] zum asymmetrischen Verschlüsseln zu verschlüsseln.

Außerdem veröffentlicht der Lotterieveranstalter zur einheitlichen und eindeutigen Auslegung des Inhalts der Nachrichten durch die Beteiligten sowie zur Erleichterung der Automatisierung der Bearbeitung von Nachrichten die Formate aller Nachrichten, welche die Beteiligten im Prozess der Anforderung der Erfüllung und der Anerkennung der Verpflichtung benutzen. Die Nachrichten können folgende Formate haben.

Format der Anforderung zur Erfüllung der scheingemäßen Verpflichtung:    <<N=*, P=*, K=*,A=*>>.
Format der Antwort des Lotterieveranstalters:    <<N=*,A=*>>.
Format der Übermittlung des Verifikators:    <<N=*, K1=*, V=*>>.
Format der Fehler-/Erfolg-Nachricht:    <<N=*,E=*>>.

In diesen Formaten bedeuten N die Nummer des Scheins, P das Passwort des Scheins, K den Sitzungsschlüssel, mit dessen Hilfe der Veranstalter die Antwort auf die Anforderung zu verschlüsseln hat (32 sedezimale Ziffern), A die Adresse, an die der Gewinn zu übermitteln ist, K1 den Sitzungsschlüssel, mit dessen Hilfe der Veranstalter die Antwort auf die Verifikationsnachricht zu verschlüsseln hat (32 sedezimale Ziffern), V den Verifikator des Scheins, E den Fehler-/Erfolg-Kode. Der Kode E=0 wird dem Teilnehmer als Antwort auf die Verifikationsnachricht bei erfolgreicher Prüfung des Scheines zurückgesandt, bei der der Veranstalter seine Verpflichtung anerkennt. Die Kode E>0 entsprechen verschiedenen Fehlern. Die Fehlerkode-Liste wird ebenfalls veröffentlicht. Beim Absenden der Nachrichten sind die Sternchen durch die realen Werte der entsprechenden Größen zu ersetzen.

Die Verpflichtung des Veranstalters, den Gewinn unter der vom Lotterieteilnehmer, der den Schein erworben hat, genannten Adresse auszureichen, wird mit jedem Schein durch Benachrichtigung potentieller Lotterieteilnehmer und durch Aufbringen einer entsprechenden Aufschrift auf jeden Schein verbunden. Andere Lotteriebedingungen werden ebenfalls veröffentlicht. Dann werden die Scheine unter den Lotterieteilnehmern vertrieben. An der Ziehung nehmen nur die Nummern der Scheine teil.

Während der Lotterieziehung stellt der Veranstalter eine vier Spalten aufweisende Gewinntabelle zusammen, deren Zeilenanzahl der Anzahl der Scheine entspricht, auf welche die Gewinne gefallen sind. Die Gewinntabelle kann das in Tabelle IV dargestellte Aussehen haben. In die Felder der Spalte «Nummer» werden die Nummern der Scheine eingetragen, auf welche die Gewinne gefallen sind, in die Felder der Spalte «Gewinn» werden die Kode der entsprechenden Gewinne eingetragen.

Ein Lotterieteilnehmer, der ein Gewinn-Los mit der Nummer 18765 erworben hat, möge die Erfüllung der mit dem Schein verbundenen Verpflichtung anfordern. Der Teilnehmer öffnet zuerst den Maskierer des Identifikators, d.h. er entfernt die Farbschicht vom Feld <<Passwort>> seines Scheins, ohne das Feld <<Verifikator>> zu berühren, wonach die Karte das in Fig. 6 gezeigte Aussehen erhält und das Passwort 27035D4B8C einem Ablesen zugänglich wird. Dann gibt der Teilnehmer die Nummer und das Passwort des Scheins in einen entsprechend programmierten Computer ein und gibt die Adresse an, unter der der Gewinn auszureichen ist. Danach generiert der Computer den Sitzungsschlüssel K und bildet die Anforderung «N=18765, P=27035D4B8C, K=B360AB551A4A874C79F17EAC4B043125, A=St.Petersburg, Radischtschev-Str. 39, Wohnung 322», in welcher der Teil «A=St.Petersburg, Radischtschev-Str. 39, Wohnung 322» die Anweisung zur Erfüllung der Verpflichtung darstellt. Danach verschlüsselt der Computer die Anforderung mittels des öffentlichen Schlüssels des Lotterieveranstalters E2 und sendet die verschlüsselte Anforderung über ein öffentliches Kommunikationsnetz an ihn ab.

Nach Erhalt der verschlüsselten Anforderung entschlüsselt der Lotterieveranstalter diese mit Hilfe des geheimen Schlüssels D2 und schreitet zur Prüfung der Gültigkeit des Scheins anhand der übermittelten Identifikator und Anweisung. Zunächst prüft der Veranstalter, ob der übermittelte Identifikator, der aus der Nummer N=18765 und dem Passwort P=27035D4B8C besteht, mit dem Identifikator eines der ausgegebenen Scheins übereinstimmt, d.h. ob N fünf Dezimalziffern aufweist und P mit den ersten zehn Sedezimalziffern der Größe H(N||R) übereinstimmt. In unserem Beispiel ist das der Fall. Danach sucht der Veranstalter in der Tabelle IV die Zeile, deren Feld «Nummer» die übermittelte Nummer 18765 enthält, d.h. er prüft, ob auf den Schein mit der Nummer N=18765 tatsächlich ein Gewinn gefallen ist. In unserem Beispiel ist auf diesen Schein ein Gewinn mit dem Kode 7 gefallen. Weiterhin prüft der Veranstalter, ob das Feld <<Zustelladresse>> der gefundenen Zeile nicht mit einer anderen Adresse belegt ist, die sich von der Adresse «St.Petersburg, Radischtschev-Str. 39, Wohnung 322» unterscheidet. Dies bedeutet, dass der Veranstalter früher niemandem eine unterzeichnete Antwort gegeben hat, die den Identifikator 1876527035D4B8C mit einer sich von «St. Petersburg, Radischtschev-Str. 39, Wohnung 322» unterscheidenden Anweisung verbindet. Danach trägt der Veranstalter die zugesandte Adresse in das Feld <<Zustelladresse>> der gefundenen Zeile ein. Die Gewinntabelle erhält das in Tabelle V dargestellte Aussehen.

Ferner bildet der Veranstalter die Antwort «N=18765, A=St.Petersburg, Radischtschev-Str. 39, Wohnung 322», unterzeichnet sie mit seinem geheimen Schlüssel D1, verschlüsselt die unterzeichnete Antwort mit Hilfe des übermittelten Sitzungsschlüssels K und sendet die unterzeichnete und verschlüsselte Antwort an den Teilnehmer über das öffentliche Kommunikationsnetz.

Die gebildete Antwort verbindet die Anweisung mit dem Kartenidentifikator, weil die Nummer der Karte eindeutig das Exemplar der Karte und deren Identifikator definiert.

Nach Erhalt der unterzeichneten und verschlüsselten Antwort entschlüsselt der Teilnehmer diese mit Hilfe des ihm bekannten Sitzungsschlüssels K, prüft die Unterschrift des Veranstalters unter der Antwort mit Hilfe des öffentlichen Schlüssels des Veranstalters E1 und prüft, ob die Antwort so aussieht: «N=18765, A=St.Petersburg, Radischtschev-Str. 39, Wohnung 322>>. Anschließend öffnet der Teilnehmer den Verifikator-Maskierer, d.h. er entfernt die Farbschicht vom Feld <<Verifikator>> seines Scheins, wonach der Schein das in Fig. 4 dargestellte Aussehen erhält und der Verifikator des Scheins 554B07E2FE zum Ablesen zugänglich wird. Danach generiert der Teilnehmer mit Hilfe des Computers den Sitzungsschlüssels K1, bildet die Verifikationsnachricht «N=18765, K1=C3BBCFF3332169AC08DC45178AOB6514, V=554B07E2FE», verschlüsselt diese mit Hilfe des öffentlichen Schlüssels E2 des Veranstalters und sendet die verschlüsselte Verifikationsnachricht über ein öffentliches Kommunikationsnetz an den Veranstalter.

Nach Erhalt der verschlüsselten Verifikationsnachricht entschlüsselt der Veranstalter diese mit Hilfe des geheimen Schlüssels D2 und sucht in der Gewinntabelle V nach einer Zeile, deren Feld «Nummer» die mit der Verifikationsnachricht übermittelte Nummer 18765 enthält. In unserem Beispiel ist eine solche Zeile vorhanden. Der Veranstalter prüft, ob das Feld <<Zustelladresse>> der gefundenen Zeile nicht leer ist, d.h. ob der Veranstalter schon früher die Anforderung erhalten hat. Danach prüft der Veranstalter die Zuordnung des übermittelten Verifikators V=554B07E2FE zu dem Identifikator mit der Nummer N=18765, d.h. er prüft, ob V mit den letzten zehn Sedezimalziffern der Größe H(N||R) übereinstimmt. In unserem Beispiel ist die Zuordnung gegeben, weshalb der Veranstalter seine mit der entsprechenden Anweisung ergänzte Verpflichtung gemäß dem Schein 18765, anerkennt; zum Zeichen dessen füllt er das Feld «Anerkennung» der gefundenen Zeile aus, wie dies beispielsweise in der Tabelle VI gezeigt wird.

Der Veranstalter bildet die Nachricht «N=18765,E=0» über die erfolgreiche Beendigung der Handlung der Prüfung des Scheins und über die Anerkennung seiner Verpflichtung durch den Veranstalter, unterzeichnet sie mit seinem geheimen Schlüssel D1, verschlüsselt die unterzeichnete Nachricht mit Hilfe des übermittelten Sitzungsschlüssels K1 und sendet die unterzeichnete und verschlüsselte Nachricht über das öffentliche Kommunikationsnetz an den Teilnehmer.

Aufgrund seiner Anerkennung erfüllt der Lotterieveranstalter die Verpflichtung, die der Verpflichtung gemäß dem Lotterieschein und der Anweisung des Teilnehmers entspricht, d.h. der Veranstalter reicht den Gewinn mit dem Kode 7 an der Adresse St.Petersburg, Radischtschev-Str. 39, Wohnung 322 aus.

Somit sind die Interessen beider Seiten auf jeder Stufe der Durchführung der Prozedur der Anforderung der Erfüllung einer mit einer Karte verbundenen Verpflichtung durch den Karteninhaber und zum Anerkennen dieser Verpflichtung durch den Emittenten sicher geschützt: entweder durch die Karte (durch den Zustand, in dem sich der Verifikator-Maskierer befindet) oder durch die Unterschrift des Emittenten unter der Antwort, welche den Kartenidentifikator und die Anweisung verbindet, die der Karteninhaber dem Emittenten übermittelt hat.

LITERATURLISTE

[1] Internet mit Plastikkarten - in Ware verwandelte Dienstleistung, READ.ME, St.Petersburg, 1997, Nr. 2(40), S. 10.

[2]Cichilov Aleksander Magomedowitsch, Gebrauchsmuster «Identifikationskarte zum Zugang zum Netz Internet», Urkunde Nr. 6460, Priorität vom 27. April 1997, eingetragen in das Gebrauchsmuster-Register am 16. April 1998.

[3] James N. Hamrick, Jr., Secured disposable debit card calling system and method, US-Patent 5 504 808, Apr. 2, 1996

[4] B. Schneier, Applied Cryptography: protocols, algorithms and source code in C, John Wiley&Sons, New York, 2nd edition, 1996, pp.784.

[5] Alfred J. Menezes, Paul C. van Oorschot and Scott A. Vanstone, Handbook of applied cryptography, CRC Press, New York, 1996, pp.816.

[6] GOST R 34.10-94 Informationstechnologie. Kryptographischer Schutz von Information. Verfahren zur Erstellung und Prüfung einer elektronischen digitalen Unterschrift auf der Basis eines asymmetrischen Algorithmus'. Isdatelstvo standartov, Moskau, 1994

[7] GOST R 34.10-94 Informationstechnologie. Kryptographischer Schutz von Information. Hash-Funktion. Isdatelstvo standartov, Moskau, 1994

Tabelle I

| Identifikator | Verifikator | Konto | Anerkennung |
|---|---|---|---|
| 78564636 | 2903857097 | | |
| 67480404 | 6503602560 | | |
| 76503306 | 5686892445 | | |
| 90476597 | 3987658782 | | |
| 75849008 | 6859522356 | | |

Tabelle II

| Identifikator | Verifikator | Konto | Anerkennung |
|---|---|---|---|
| 78564636 | 2903857097 | | |
| 67480404 | 6503602560 | | |
| 76503306 | 5686892445 | 1001 | |
| 90476597 | 3987658782 | | |
| 75849008 | 6859522356 | | |

Tabelle III

| Identifikator | Verifikator | Konto | Anerkennung |
|---|---|---|---|
| 78564636 | 2903857097 | | |
| 67480404 | 6503602560 | | |
| 76503306 | 5686892445 | 1001 | anerkannt |
| 90476597 | 3987658782 | | |
| 75849008 | 6859522356 | | |

Tabelle IV

| Nummer | Gewinn | Zustelladresse | Anerkennung |
|---|---|---|---|
| 00501 | 3 | | |
| ... | ... | | |
| 18765 | 7 | | |
| ... | ... | | |
| 90032 | 5 | | |

Tabelle V

| Nummer | Gewinn | Zustelladresse | Anerkennung |
|---|---|---|---|
| 00501 | 3 | | |
| ... | ... | | |
| 18765 | 7 | St.Petersburg, Radischtschev- Str. 39, Wohnung 322 | |
| ... | ... | | |
| 90032 | 5 | | |

Tabelle VI

| Nummer | Gewinn | Zustelladresse | Anerkennung |
|--------|--------|----------------|-------------|
| 00501 | 3 | | |
| ... | ... | | |
| 18765 | 7 | St.Petersburg, Radischtschev- Str. 39, Wohnung 322 | anerkannt |
| ... | ... | | |
| 90032 | 5 | | |

**Patentansprüche**

1. Verfahren zum Anfordern der Erfüllung einer mit einer Karte verbundenen Verpflichtung durch den Karteninhaber und zum Anerkennen dieser Verpflichtung durch den Emittenten, umfassend

   die Ausgabe von einen Identifikator aufweisenden Karten, mit deren jeder eine Verpflichtung des Emittenten verbunden ist,
   das Ablesen des Identifikators von der Karte durch den Karteninhaber,
   die Übermittlung eines abgelesenen Identifikators und einer Anweisung zur Erfüllung einer mit der Karte verbundenen Verpflichtung vom Karteninhaber an den Emittenten,
   die Prüfung der Gültigkeit der Karte anhand des vom Karteninhaber übermittelten Identifikators und der Anweisung durch den Emittenten und
   die Anerkennung einer Verpflichtung, die der Verpflichtung gemäß der Karte und der Anweisung des Karteninhabers entspricht, durch den Emittenten,

   **dadurch gekennzeichnet,**

   **dass** Karten ausgegeben werden, deren jede zusätzlich mit einem dem Identifikator entsprechenden und zumindest teilweise mit Hilfe eines Maskierers verdeckten Verifikator versehen ist,
   **dass** der Emittent bei der Prüfung der Gültigkeit der Karte anhand des vom Karteninhaber übermittelten Identifikators und
   der Anweisung prüft, dass er früher niemandem eine unterzeichnete Antwort abgegeben hat, die den vom Karteninhaber übermittelten Identifikator mit einer Anweisung verbindet, die mit der vom Karteninhaber übermittelten Anweisung nicht übereinstimmt,
   **dass** er eine Antwort an den Karteninhaber erstellt, welche übermittelten Identifikator und Anweisung verbindet, die erstellte Antwort unterzeichnet und die unterzeichnete Antwort an den Karteninhaber sendet,
   **dass** der Karteninhaber nach Erhalt der vom Emittenten unterzeichneten Antwort die Unterschrift unter der Antwort prüft und auch prüft, ob die unterzeichnete Antwort den Identifikator mit der Anweisung verbindet, die der Karteninhaber dem Emittenten übermittelt hat,
   wonach der Karteninhaber den Verifikator von der Karte abliest und den Verifikator dem Emittenten übermittelt, der nach Erhalt des Verifikators prüft, ob der vom Karteninhaber übermittelte Verifikator dem vom Karteninhaber übermittelten Identifikator entspricht, und die Gültigkeitsprüfung der Karte beendet.

2. Verfahren nach Anspruch 1, **dadurch gekennzeichnet, dass** die Identifikatoren bei der Kartenausgabe so gewählt werden, dass die Wahrscheinlichkeit dafür, dass zufällig gewählte Daten mit dem Identifikator einer der ausgegebenen Karte übereinstimmen, kleiner als eine vorgegebene Wahrscheinlichkeit ist.

3. Verfahren nach Anspruch 1, **dadurch gekennzeichnet, dass** die Karten mit einem Identifikator ausgegeben werden, der zumindest teilweise mittels eines Maskierers verdeckt ist.

4. Verfahren nach Anspruch 3, **dadurch gekennzeichnet, dass** Karten ausgegeben werden, bei denen das Öffnen eines Maskierers des Verifikators zum Öffnen des Maskierers des Identifikators führt.

5. Verfahren nach Anspruch 3, **dadurch gekennzeichnet, dass** der Karteninhaber beim Ablesen des Identifikators von der Karte einen der vorgesehenen Maskierer öffnet, die Daten liest, die von dem nun geöffneten Maskierer verdeckt wurden, und diese Daten als Identifikator benutzt.

6. Verfahren nach Anspruch 1, **dadurch gekennzeichnet, dass** Karten ausgegeben werden, die aus mehreren Teilen mit zusätzlichen Daten bestehen, die die Zuordnung zwischen den Kartenteilen bestimmen.

7. Verfahren nach Anspruch 1, **dadurch gekennzeichnet, dass** bei der Prüfung der Gültigkeit der Karte anhand der vom Karteninhaber übermittelten Identifikator und Anweisung der Emittent zusätzlich die Übereinstimmung des übermittelten Identifikators mit dem Identifikator einer der ausgegebenen Karten prüft.

8. Verfahren nach Anspruch 1, **dadurch gekennzeichnet, dass** bei der Durchführung der Prozedur der Unterschrift unter die gebildete Antwort eine digitale Unterschrift benutzt wird.

9. Verfahren nach Anspruch 1, **dadurch gekennzeichnet, dass** abgelesener Identifikator und Anweisung zur Erfüllung einer mit der Karte verbundenen Verpflichtung dem Emittenten über Telekommunikationskanäle übermittelt werden.

10. Verfahren nach Anspruch 1, **dadurch gekennzeichnet, dass** die unterzeichnete Antwort dem Karteninhaber über Telekommunikationskanäle übermittelt wird.

11. Verfahren nach Anspruch 1, **dadurch gekennzeichnet, dass** der Verifikator dem Emittenten über Telekommunikationskanäle übermittelt wird.

12. Verfahren nach Anspruch 1, **dadurch gekennzeichnet, dass** bei der Übermittlung des abgelesenen Identifikators und der Anweisung zur Erfüllung der mit der Karte verbundenen Verpflichtung vom Karteninhaber zum Emittenten von einer Verschlüsselung Gebrauch gemacht wird.

13. Verfahren nach Anspruch 1, **dadurch gekennzeichnet, dass** bei der Übermittlung des abgelesenen Identifikators und der Anweisung zur Erfüllung der mit der Karte verbundenen Verpflichtung vom Karteninhaber zum Emittenten dem Emittenten zusätzlich ein Schlüssel zum Verschlüsseln übermittelt wird, den der Emittent zum Verschlüsseln der unterzeichneten Antwort an den Karteninhaber benutzt.

14. Verfahren nach Anspruch 1, **dadurch gekennzeichnet, dass** in die Anweisung zur Erfüllung der mit der Karte verbundenen Verpflichtung identifizierende Daten einer Person aufgenommen werden, die die Erfüllung der anerkannten Verpflichtung zusätzlich überprüft.

15. Verfahren nach Anspruch 14, **dadurch gekennzeichnet, dass** in die identifizierenden Daten einer die Erfüllung der anerkannten Verpflichtung zusätzlich überprüfenden Person deren öffentlicher Schlüssel in einem vorgegebenen System der digitalen Unterschrift aufgenommen wird.

16. Verfahren nach Anspruch 1, **dadurch gekennzeichnet, dass** der Karteninhaber zusammen mit dem Kartenverifikator dem Emittenten wiederholt den Kartenidentifikator oder einen Teil davon übermittelt.

17. Verfahren nach Anspruch 1, **dadurch gekennzeichnet, dass** der Emittent bei der Prüfung der Gültigkeit der Karte anhand der vom Karteninhaber übermittelten Identifikator und Anweisung zusätzlich die vom Karteninhaber übermittelte Anweisung daraufhin prüft, ob diese vorgegebenen Kriterien entspricht.

18. Verfahren nach Anspruch 1, **dadurch gekennzeichnet, dass** bei der Prüfung des Emittenten, dass er niemandem schon früher eine unterzeichnete Antwort gegeben hat, die den vom Karteninhaber übermittelten Identifikator mit einer Anweisung verbindet, die mit der vom Karteninhaber übermittelten Anweisung nicht übereinstimmt, der Emittent keine früher abgegebene Antwort berücksichtigt, wenn deren Unterschrift ihre Kraft verloren hat und die Verpflichtung gemäß der Karte, deren Identifikator durch diese Antwort mit der Anweisung verbunden ist, nicht anerkannt worden ist.

**Bankkarte**

100 Rubel

Identifikator          76503306
Verifikator            5686892445

## Fig. 1

**Bankkarte**

100 Rubel

Identifikator          ▨▨▨▨▨▨▨
Verifikator            ▨▨▨▨▨▨▨

## Fig. 2

**Bankkarte**

100 Rubel

Identifikator          76503306
Verifikator            ▨▨▨▨▨▨▨

## Fig. 3

**Lotterieschein**

Nummer          18765

Passwort        27035D4B8C

Verifikator      554B07E2FE

## Fig. 4

**Lotterieschein**

Nummer          18765

Passwort

Verifikator

## Fig. 5

**Lotterieschein**

Nummer          18765

Passwort        27035D4B8C

Verifikator

## Fig. 6